# EUROPEAN PATENT APPLICATION

(11) **EP 4 838 273 A1**
(43) Date of publication of application: **11.11.2026**
(21) Application number: 26177330.3
(22) Date of filing: 07.05.2026
(51) Int. Cl.: G02B 6/02, G02B 6/00, G02F 1/13

(54) **METHODS FOR SELECTING HIGH BANDWIDTH MULTIMODE FIBER**

(30) Priority: 07.05.2025 US 202519201040
(71) Applicant: Panduit Corp., Tinley Park, Illinois 60487 (US)
(72) Inventor: CASTRO, Jose M., Tinley Park, 60487 (US); KOSE, Bulent, Tinley Park, 60487 (US); HUANG, Yu, Tinley Park, 60487 (US)
(74) Representative: Sona, Alessandro

(57) **Abstract**

A method for selecting a graded-index glass optical multimode fiber that achieves a target modal bandwidth when used in an optical channel with a multimode vertical-cavity surface-emitting laser, utilizing an offset or vortex launch within an [A, B] micron region inside a multimode fiber core, the method comprising: computing a radially localized modal bandwidth of the multimode fiber at a plurality of radial offsets, r, within a selected range of offset launches, A ≤ r ≤ B; maintaining a percentage, P, of an optical power of the laser around a radial offset, r, within the [A, B] micron region, wherein the [A, B] micron region extends beyond the selected range with a tolerance [A ± X, B ± X]; using at least one wavelength, λ, to perform a differential mode delay, DMD, test, with spectral range 840nm ≤ λ ≤1060 nm, wherein a single mode fiber is used to simulate the offset launch and behaves as single mode fiber in the spectral range of λ; selecting the multimode fiber if its radially localized modal bandwidth is equal to or greater than the target modal bandwidth.

## Description

### FIELD

The present disclosure relates to apparatus and methods for optimizing multimode fiber (MMF) channel bandwidth based on the combined modal and chromatic bandwidth for specific vertical-cavity surface-emitting lasers (VCSELs). The MMFs selected using the disclosed method and metrics highly improve the channel bandwidth relative to non-selected MMFs for a desired type of VCSEL.

### BACKGROUND

Cost and reliability advantages have favored the predominance of short and intermediate-reach optical channels employing transmitters utilizing VCSELs operating at around 850 nm over a 50-micron graded index multimode fiber (MMF). However, these systems have two significant limitations to achieving high data rates or suitable channel reach: modal and chromatic dispersion. Modal dispersion results from the difference in group velocities of the MMF modes, a consequence of imperfections in the MMF refractive index profile. Chromatic dispersion is due to the difference in propagation speeds of the spectral components of the transmitted signal.

Due to these limitations, MMF channels saw reduced use at higher data rates in favor of single mode. AI/ML has reversed that trend, as AI networks require high bandwidth over short reaches (10-50m) to connect GPU servers to first-level switches. MMF remains advantageous in these cases, offering better power efficiency and reduced sensitivity to contamination. However, MMF transceivers using VCSELs have not improved as much as single-mode ones. To reach 50m with enough headroom to address channel impairments and improve reliability, standard MMF specifications must be increased. Calculations with a VCSEL spectral width below 0.5 nm show that the fiber's modal bandwidth must be at least 5.5 GHz·km. Achieving this in today's fiber distribution impacts yield, and the requirement is mainly independent of launch conditions.

Since Cunningham and others work on launch conditions [1-4], several launch types have been studied, including central launch, encircled flux, offset, vortex, and dual-spot launches, which demonstrate higher modal bandwidth. Beyond launch optimization, the inventors introduce a technique to enhance both modal and total bandwidth (modal + chromatic) based on Mode Spectral Bias (MSB) and Modal-Chromatic Dispersion Interaction (MCDI), as detailed in [5].

Our experiments show that launching light into specific MMF regions, combined with an enhanced fiber selection process applied to OM3, OM4 [8], or OM5 MMFs, consistently achieves modal bandwidths exceeding particular targets, for example, a range of bandwidths between 4.7 to 6.5 GHz·km⁻¹. This requires a precise offset launch.

However, since practical offset launch implementations in transceivers have tolerances, a controlled level of MCDI is helpful for maintaining high bandwidth and correcting the signal dispersion outside the targeted fiber regions.

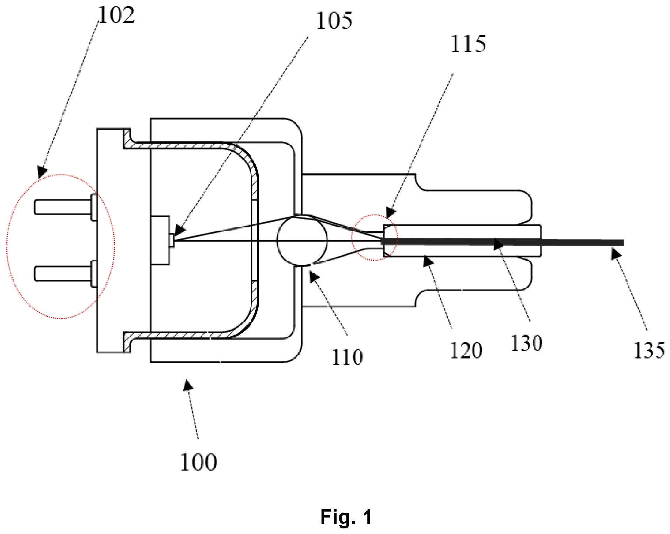

To better describe the examples disclosed in the next section, it is necessary to illustrate the mode spatial, spectral, and temporal characteristics of the VCSEL and fiber. Fig. 1 shows a diagram of a VCSEL coupling light to a MMF. In that figure, 100 represents the VCSEL package, 102 the electrical connections, 105 the VCSEL, 110 a coupling lens (or diffractive element), and 115 represents the coupling interface between light from lens 110 and fiber 130. The fiber 130 is inside the ferrule 120. The coupling strength depends on the VCSEL, the fiber mode profile, the alignment tolerances of the lens and ferrule, and the degree of defocus and aberrations of the lens.

In this diagram, we initially assume that the propagation axis of the VCSEL 105 aligns with the propagation axis of the MMF 130 (zero or negligible radial offset launch).

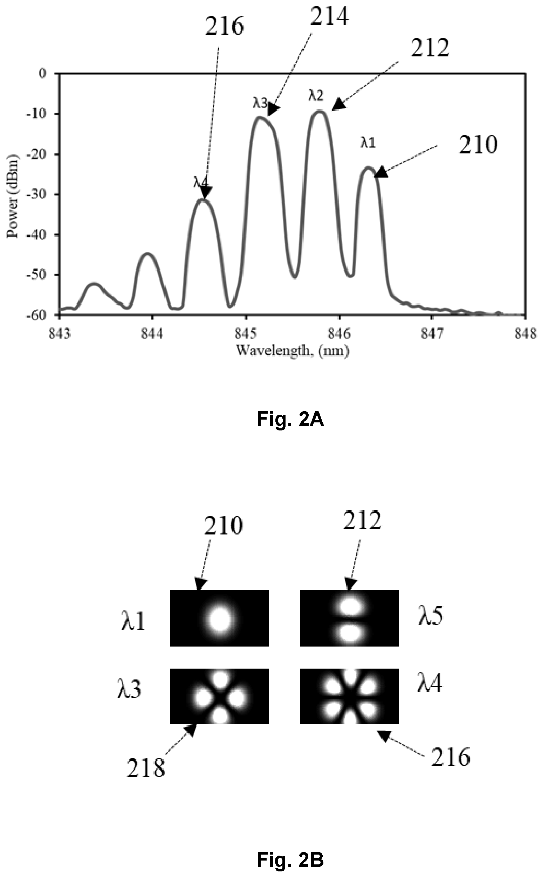

Fig. 2A shows a VCSEL spectrum that contains most of its power in four mode sets, **210, 212, 214,** and **216,** where **210** corresponds to the lowest order mode (LOM) and **216** to the highest order mode (HOM). In this VCSEL example, the center wavelengths of each mode set **210, 212, 214,** and **216** correspond to λ1, λ2, λ3, and λ4, respectively, where λ1> λ2> λ3> λ4. Each mode set has a distinctive intensity mode pattern, as shown in Fig. 2B. Assuming that the VCSEL couple to a MMF with zero modal dispersion, the VCSEL HOMs, which have shorter center wavelengths, e.g., **216** (λ4) will travel slower than the LOMs, which have longer wavelengths, e.g., **210** (λ1), due to the chromatic properties of the optical fiber.

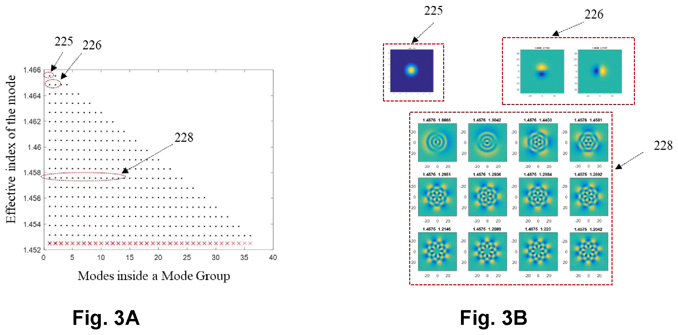

Fig. 3A illustrates laser-optimized MMF parameters in the 850-880 nm range. The vertical axis represents the effective index of 19 mode groups, while the horizontal axis shows the number of modes per group, increasing with mode order. Dots indicate individual modes: 225 marks the first mode of group 1 (lowest order), 226 shows two modes of group 2, and 228 represents 12 modes of group 12. Fig. 3B displays the intensity mode profiles of selected dots. MCDI depends on VCSEL-fiber mode coupling strength, chromatic dispersion, and relative mode delay speeds. The coupling strength is determined by mode pattern affinity, mathematically expressed as the overlap integral of complex field patterns, which causes VCSEL LOMs to couple more strongly to MMF LOMs, while VCSEL HOMs primarily couple to MMF HOMs.

Since each VCSEL mode set corresponds to a specific central wavelength (Figs. 2A and 2B), longer wavelengths tend to couple at small fiber core radii. In contrast, shorter wavelengths tend to couple at higher radii. Fig. 4 illustrates this effect, which is validated with measurements in [7]. Prior work [5] also shows that MMFs can be classified as Left-tilted (L-MMF) or Right-tilted (R-MMF) based on Differential Mode Delay (DMD) tests, as shown in Figs. 5A and 5B. For L-MMF, HOMs travel faster than LOMs, while in R-MMF, LOMs travel faster than HOMs.

For L-MMF, VCSEL HOMs (slow) couple to MMF HOMs (fast), and VCSEL LOMs (fast) couple to MMF LOMs (slow), leading to modal and chromatic dispersion compensation (MCDC), reducing dispersion, and increasing channel bandwidth. In contrast, for R-MMF, VCSEL HOMs (slow) couple to MMF HOMs (slow), and VCSEL LOMs (fast) couple to MMF LOMs (fast), exacerbating dispersion and decreasing bandwidth.

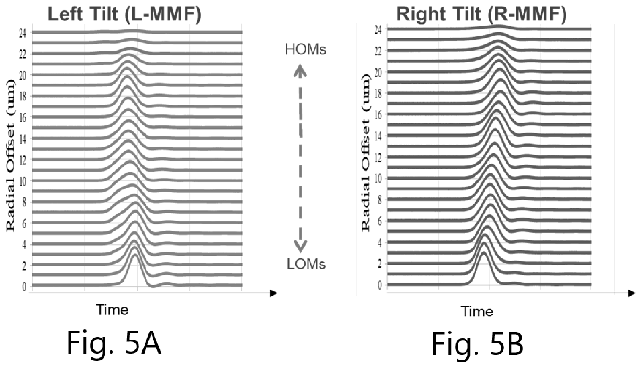

Prior art, such as US Patent Nos. 8,351,027, 8,488,115 and 8,398,900, also Publication No.: 2011/0054861, describe either methods to design and manufacture the L-MMF or methods for selecting it. The disclosed selection methods L-MMF compared the DMD peak pulse delays at various radial waveform offsets. The method measures the DMD radial pulse waveforms, similar to those shown in Figs. 5A and 5B, and compares the temporal position of peak amplitudes between two radial offsets selected at a low and high radius inside the MMF core. For example, the temporal position of 19 µm radial offset is compared to the temporal position of a LOM at 5 µm radial offset. In one of the authors' previous disclosures, the difference in delays as defined in the previous method as the "*P-Shift*" metric and is calculated using, $P - Shift \left(ps/m\right) = \frac{19 μm delay \left(ps\right) - 5 μm delay \left(ps\right)}{Fiber Length \left(m\right)}$ In general, other ranges or radii are allowed to estimate this metric.

Prior selection methods aimed to optimize VCSEL performance across various launch conditions and wavelengths but did not fully optimize a selection for a specific restricted launch condition. For AI/ML short-reach applications, precise launch conditions will be essential for MMF channels to increase the bandwidth for future VCSEL transceivers launch conditions. At the same time, optimization for a given launch condition must not significantly reduce the manufacturing yield of the MMF.

### SUMMARY

The invention to which the present European patent relates is defined in the appended claims.

In one example of the present disclosure, there is provided a method for selecting a graded-index glass optical multimode fiber that achieves a target modal bandwidth when used in an optical channel with a multimode vertical-cavity surface-emitting laser, utilizing an offset or vortex launch within an [A, B] micron region inside a multimode fiber core, the method comprising: computing a radially localized modal bandwidth of the multimode fiber at a plurality of radial offsets, r, within a selected range of offset launches, A ≤ r ≤ B; maintaining a percentage, P, of an optical power of the laser around a radial offset, r, within the [A, B] micron region, wherein the [A, B] micron region extends beyond the selected range with a tolerance [A ± X, B ± X]; using at least one wavelength, λ, to perform a differential mode delay, DMD, test, with spectral range 840nm ≤ λ ≤1060 nm, wherein a single mode fiber is used to simulate the offset launch and behaves as single mode fiber in the spectral range of λ; selecting the multimode fiber if its radially localized modal bandwidth is equal to or greater than the target modal bandwidth.

In other words, the present disclosure provides an example method for selecting graded-index glass optical multimode fibers that achieve a targeted modal bandwidth when used in an optical channel with a multimode vertical-cavity surface-emitting laser, utilizing an offset or vortex launch within an [A, B] micron region inside a multimode fiber core includes computing a radially localized modal bandwidth at a plurality of radial offsets, r, within a selected range of offset launches (A ≤ r ≤ B). Next, the method maintains P% of the optical power maintained at a radial position r ± X, which may extend beyond the range wherein at least one wavelength, λ, is used to perform a differential mode delay (DMD) test, 840nm ≤ λ≤1060 nm, the single mode fiber used to simulate the offset launch behaves as single mode (one mode) in the spectral range of λ, the multimode fibers are selected if their radially localized modal bandwidth is equal to or greater than a target bandwidth.

### BRIEF DESCRIPTION OF THE DRAWINGS

Fig. 1 illustrates the components of a VCSEL package.
Fig. 2A shows a VCSEL spectrum that contains most of its power in four mode sets.
Fig. 2B shows the intensity mode pattern for each of the mode sets of Fig. 2A.
Fig. 3A illustrates laser-optimized MMF parameters in the 850-880 nm range.
Fig. 3B displays the intensity mode profiles of selected dots.

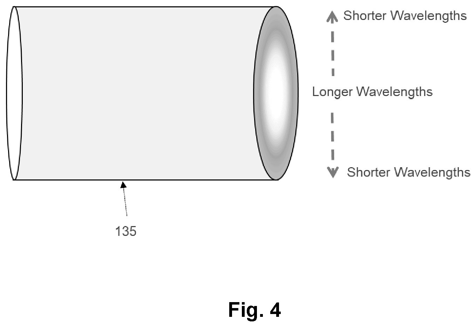

Fig. 4 illustrates the MMF core's spectral bias resulting from coupling VCSELs to the fiber.
Fig. 5A illustrates the first of two types of fibers MMF that share similar EMB but different DMD tilt.
Fig. 5B illustrates the second of two types of fibers MMF that share similar EMB but different DMD tilt.

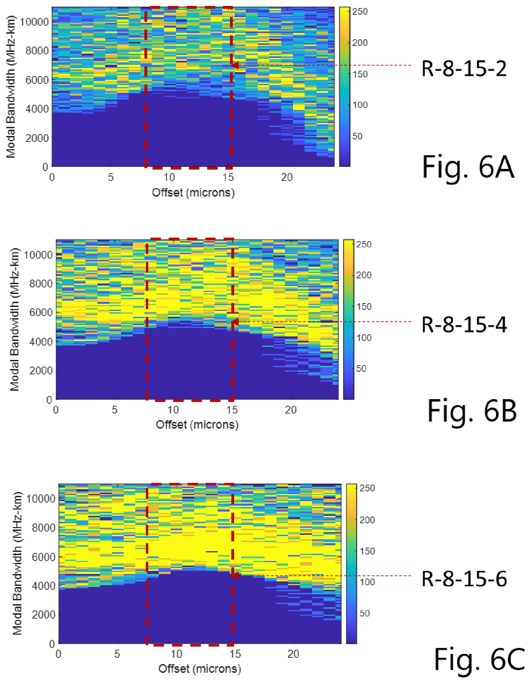

Fig. 6A illustrates an image of an intensity map of the modal bandwidth dependence on launch conditions for the OM4 MMF set for an RMS width of two microns. The horizontal represents the radial offset in microns, and the vertical axis is the modal bandwidth in MHz-km.
Fig. 6B illustrates an image of an intensity map of the modal bandwidth dependence on launch conditions for the OM4 MMF set for an RMS width of four microns.
Fig. 6C illustrates an image of an intensity map of the modal bandwidth dependence on launch conditions for the OM4 MMF set for an RMS width of 6 microns.

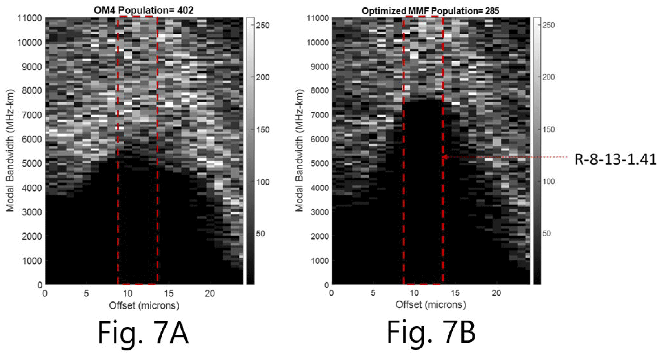

Fig. 7A illustrates the modal bandwidth dependence on launch conditions of an original OM4 set.
Fig. 7B illustrates the modal bandwidth dependence on launch conditions of a disclosed selection method which achieves a modal bandwidth ≥ 5500 MHz-km for a launch where 68% of the optical power intensity is concentrated within a spot of 1.41 microns radius within radial offsets 8 to 13 microns.

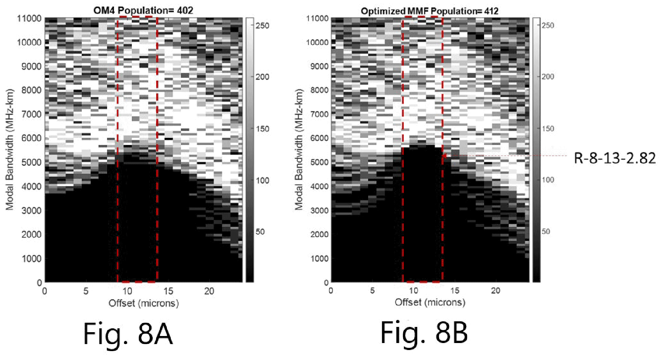

Fig. 8A illustrates the modal bandwidth dependence on launch conditions of an original OM4 set.
Fig. 8B illustrates the modal bandwidth dependence on launch conditions of the set from a disclosed selection method which achieves a modal bandwidth ≥ 5500 MHz-km for a launch within radial offsets 8 to 13 microns.

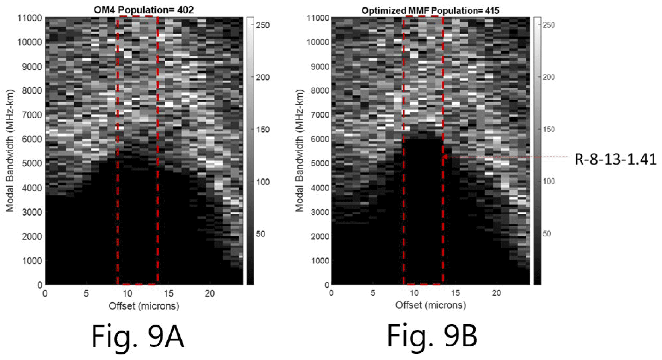

Fig. 9A illustrates the modal bandwidth dependence on launch conditions of an original OM4 set.
Fig. 9B illustrates the modal bandwidth dependence on launch conditions of he set from the disclosed selection method which achieves a modal bandwidth ≥ 6000 MHz-km for a launch within radial offsets 8 to 13 microns.

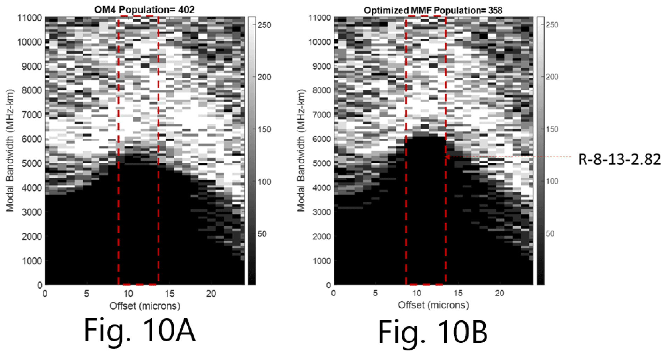

Fig. 10A illustrates the modal bandwidth dependence on launch conditions of an original OM4 set.
Fig. 10B illustrates the modal bandwidth dependence on launch conditions of the set from disclosed selection method which achieves a modal bandwidth ≥ 6000 MHz-km for a launch where 68% of the optical power intensity is concentrated within 8 to 13 microns.

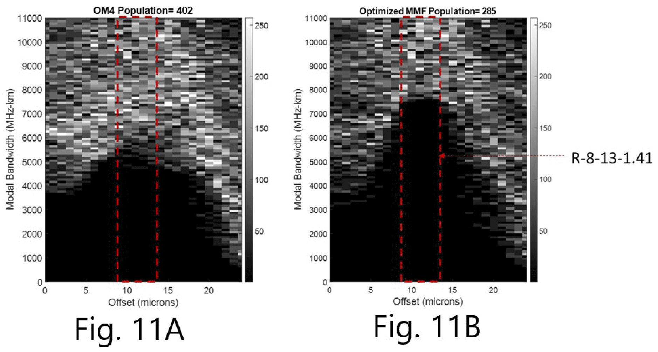

Fig. 11A illustrates the modal bandwidth dependence on launch conditions of an original OM4 set.
Fig. 11B illustrates the modal bandwidth dependence on launch conditions of the set from disclosed selection method which achieves a modal bandwidth ≥ 7500 MHz-km for a launch within radial offsets 8 to 13 microns.

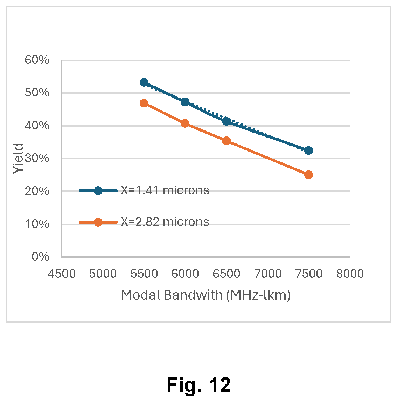

Fig. 12 shows Yield vs TMB dependence for two degrees of focus for a launch in the regions A=8 and B=13 microns.

### DESCRIPTION

A selection method for optimizing MMF bandwidth for specific launch conditions is disclosed. This fiber can enhance performance for transceivers operating at data rates beyond 112 Gbps per optical lane when light is launched in specific regions of the MMF core. An optical lane consists of one fiber (with two counter-propagation signals) or a duplex channel with two fibers. The selection method can be further enhanced by using P-shift or the other methods described by the inventors in the prior art to enable modal-chromatic dispersion compensation for the light that escapes targeted.

An application example is MMF channels operating at more than 200Gbps per lane. The optimized MMF is just one factor in the total system bandwidth. The transceivers must be designed with a reduced spectral width and a controlled launch condition. Additionally, the DSP chips in the transceivers, the switch, or the network interface cards (NICs) require enhanced equalization and more error correction capabilities to operate with error correction ratios, on the order of 1e-3, which are significantly higher than the previous generation ( 1e-4 or 1e-5).

To investigate how the MMF can be selected to optimize bandwidth without a significant yield decrease (relative to the OM4 selection), a total of 879 multimode fibers, a mix of OM3 and OM4, were sourced from various vendors. Manufacturers typically rely on fast but less accurate pass/fail tests to classify MMFs as OM3, OM4 or OM5 and do not provide detailed DMD pulse data, which is essential for our analysis. For our study, the fibers were remeasured using high-grade research equipment and then reclassified as a new set of OM3 and OM4.

A specially designed single-mode fiber, which operates in single mode at wavelengths equal to or longer than 850 nm, was used to simulate launch conditions. This fiber was precisely positioned across the multimode fiber (MMF) core in 1-micron steps, covering four quadrants along the X and Y axes from 0 to 25 microns. The DMD pulses were captured with a temporal resolution of 0.5 picoseconds, using a high-precision sampling oscilloscope, capturing at least 2048 temporal samples per DMD pulse waveform. The EMB was calculated using the 10 standardized VCSEL weights defined in the standard DMD method [8]. As a result, the MMFs were reclassified as 477 OM3 and 402 OM4 fibers. All these temporal pulses per radial offset measurements for all the MMFs were stored for our investigation. The measurement system with sub-micron positioning and sub-picosecond temporal accuracy ensures that high repeatable data is needed for our study.

Utilizing our comprehensive dataset, we conducted a detailed analysis to understand the impact of launch conditions on modal bandwidth. By mathematically estimating the radially localized modal bandwidth for offsets ranging from 0 to 25 microns and assuming a Gaussian intensity distribution with various root mean square (RMS) widths at each launch position, we observed a consistent trend: For multimode fibers, the modal bandwidth improves when the launch condition targets radial offsets between 8 and 15 microns. This trend is illustrated in Figs. 6A-C, which shows an intensity map of the radially localized modal bandwidth and its dependence on radial offset launch condition.

The horizontal represents the radial offset in microns, and the vertical axis is the radially localized modal bandwidth in MHz-km. In Figs. 6A-C, we adopt the nomenclature R-A-B-X for the selected region (dotted squares), where R represents the region, A and B specify the beginning and end of the selected offset range, and X denotes the Gaussian intensity pattern's RMS width. For example, R-8-15-2 corresponds to the region covering radial offsets from 8 to 15 microns, assuming an RMS width of 2 microns for the intensity pattern. Assuming a Gaussian intensity pattern, this means that the light of the VCSEL is projected to the fiber, with a center position inside the 8-15 micron range, e.g., 10 microns center position with 68% of the optical power is concentrated in ± 2 microns.

Despite variations, the data shown in Figs. 6A-C shows that a launch focalized at radial offsets between 8 and 15 microns, (regions R-8-15-X), tend to statistically increase the radially localized modal bandwidth for most of the MMFs.

It may seem contradictory to those unfamiliar with MMFs that OM4 fibers, selected for EMB ≥ 4,700 MHz·km, can exhibit significantly lower radially localized modal bandwidths at specific offsets, as shown in Figs. 6A-C. This occurs because large radial offset launches excite higher-order modes with greater dispersion within mode groups, while center launches increase modal dispersion in fibers with a central refractive index defect. Additionally, applying VCSEL weights, as defined in [8], averages the modal bandwidth, sometimes yielding higher values than those at extreme radial offsets.

Therefore, while OM4 fibers are designed to meet or exceed specific EMB specifications (specified VCSEL weights, see [8]), our experiments show that the actual modal bandwidth can vary significantly depending on the particular launch conditions and the DMD profile of the fibers.

A method for selecting fibers with modal bandwidth above a target (TMB) based on VCSEL launch within a radial offset of A to B microns at any quadrant of a MMF core is described. Based on described experiments A≥ 8 microns, and B≤15 as described in the following steps:
- Specify TMB, e.g., TMB= 5500 MHz-km.
- Define the offset launch condition range A and B. For example, A=9 microns and B=13 microns.
- Select the desired RMS radius, given by X, which will include the P percent of the power. For example, X=1.41 microns for P=68% of the power, assuming a Gaussian intensity distribution at the MMF core.
   ∘ Note that the launch is confined to a radial offset of [A, B] ± X but is not azimuthally restricted due to the MMF circular symmetry.
- Capture or load temporal DMD pulse waveforms, denoted as *DMDp(t,r)* as the waveform at radius r, where A ≤ r ≤ B.
   ∘ Alternatively, loading the waveform can be done if the DMD measurements have already been performed.
- Reject fibers with excessive radially localized dispersion in the MMF. This can be achieved by measuring the broadening of radially localized DMD pulses relative to the reference pulse RP(t). Note that this is a helpful but optional step to simplify the processing required in further steps.
   o For example, compute $RW = \left(\sqrt[2]{T _ {{DMD}_{P}}^{2} - T _ {RP}^{2}}\right.$, in ps/km where *T_DMD_{P}* is the width of DMDp(t,r) and T_RP the width of RP(t).
   ∘ Select the largest RW value within the radial offset regions A, B, and RWmax.
   ∘ Reject the fiber if RWmax > 2.4*e*6/*EMB*^{1.16}*.*
- Compute the intensity pattern *I*(*r*) = exp (*r*²/(*2X*²)*.*
- Compute waveform $S \left(t, r\right) = {\sum }_{r ′ = 0}^{25} I \left(r′-r\right) \times DMD _ p \left(t,r′\right)$*.*
- Compute *TF*(*f,r*) *= abs*(*FT*{*S*(*t,r*))}/*FT*(*RP*(*t*)}) where abs is the absolute value function and *FT* the Fourier Transform.
- For all radial offsets in the [A, B] range, find the smaller frequency, *fb(r)*, that makes $TF \left(fb\left(r\right),r\right) = 1 / \sqrt{2}$*.*
- Select the smallest frequency fb(r), in the radial offset A and B, *fb*_*min*=*min(fb(r))* for A ≤ r ≤B.
- If *fb*_*min* > *TMB* /*1.15* the fibers are selected.
- (Optional) Apply the previous steps only to L-MMF (negative P-shift) to provide an additional margin to compensate for manufacturing tolerances providing high MMF channels.

We illustrate our method for three TMBs: 5500 MHz-km, 6000 MHz-km, and 7500 MHz-km for the region defined by A = 8 µm and B = 13 µm, evaluating various degrees of laser focusing over the MMF core. Considering that distances for the AI backend networks are below 50m, these TMBs can provide at least 110 GHz modal bandwidth.

Fig. 7A shows the radially localized modal bandwidth of 402 OM4 fibers before selection, representing 45.7% of the 879 fibers. Fig. 7B presents the set of 468 fibers (53% of 879) chosen using the disclosed method assuming TMB= 5500 MHz-km, an intensity profile width of X = 1.41 µm (68% of the power). Note that the selected set is larger than the OM4 MMF set.

Fig. 8A shows the case for X=2.82 µm. In this case, the population of the selected fibers with radially localized modal bandwidth ≥ 5500 MHz-km is 412, or 47% of the whole population, which is still higher than the original OM4 percentage (45%).

The disclosed method allows the selection of higher TMB. For example, Figs. 9A and 9B and Figs. 10A and 10B show the case for TMB=6000MHz-km for X = 1.41 µm and X = 2.82 µm, respectively. In those cases, the yield reduces to 47% and 40 %, respectively, which is still comparable to the size of the OM4 set.

As expected, there is a direct dependence between the TMB, X, and the yield. As TMB increases, the population yield decreases, as shown. Also, the more concentrated the light in a specific radial offset between 8 and 13 microns, the higher the yield. Fig. 12 shows the yield dependence of those parameters.

Using the disclosed selection method, we demonstrate the modal bandwidth of a 50m channel can be increased to 110GHz or even 150GHz, which can be helpful for data rates of rt 224 Gbps/wavelength MMF channels, achieving up to 1.6 Tbps over eight lanes. Using two wavelengths (e.g., 860 nm and 910 nm) in a counter- or co-propagating scheme, 3.2 Tbps can be achieved over MMF with transceivers featuring arrayed connectivity such as MPO-16, SN-MT 16, or MMC-16.

While exemplary embodiments are described above, it is not intended that these embodiments describe all possible forms of the invention. Rather, the words used in the specification are words of description rather than limitation, and it is understood that various changes may be made without departing from the scope of the invention. Additionally, the features of various implementing embodiments may be combined to form further embodiments of the invention.

### References

[1] L. J. Sargent, M. Webster, I. H. White, P. J. Heard, R. V. Penty, M. R. T. Tan, and D. G. Cunningham, "Simple technique for bandwidth enhancement of multimode fiber links using controlled spatial emission from vertical cavity surface emitting lasers," Electron. Lett., vol. 34, pp. 2038-2040, Oct. 1998.
[2] L. Raddatz, I. H. White, D. G. Gunningham, and M. C. Nowell, "Influence of restricted mode excitation on bandwidth of multimode fiber links," IEEE Photon. Technol. Lett., vol. 10, pp. 534-536, Apr. 1998.
[3] M. Webster, L. Raddatz, I. H. White, and D. G. Cunningham, "A statistical analysis of conditioned launch for gigabit ethernet links using multimode fiber," J. Lightwave Technol., vol. 17, pp. 1532-1541, Sept. 1999.
[4] IEC Specification for Multimode launch conditions, IEC TR 62614-2, July 2015.
[5] J. Castro, R. Pimpinella, B. Kose, and B. Lane, "Investigation of the Interaction of Modal and Chromatic Dispersion in VCSEL-MMF Channels," IEEE-OSA J. Lightw. Technol., vol. 30, no. 15, pp. 2532-2541, Aug. 2012.
[6] TIA Specification for 850-nm Laser Optimized, OM4 MMF TIA-492AAAD, Sept. 2009.
[7] J. M. Castro, R. Pimpinella, B. Kose, P. Huang, A. Novick and B. Lane, "Modal-Chromatic dispersion interaction effects for 850 nm VCSEL channels at 100 Gb/s per wavelength", J. Lightw. Technol., vol. 39, no. 7, pp. 2067-2076, Apr. 2021.
[8] TIA DMD Measurement of Multimode Fiber in the Time Domain, TIA-455-220-A, January 2003.

## Claims

1. A method for selecting a graded-index glass optical multimode fiber that achieves a target modal bandwidth when used in an optical channel with a multimode vertical-cavity surface-emitting laser, utilizing an offset or vortex launch within an [A, B] micron region inside a multimode fiber core, the method comprising:
computing a radially localized modal bandwidth of the multimode fiber at a plurality of radial offsets, r, within a selected range of offset launches, A ≤ r ≤ B;
maintaining a percentage, P, of an optical power of the laser around a radial offset, r, within the [A, B] micron region, wherein the [A, B] micron region extends beyond the selected range with a tolerance [A ± X, B ± X];
using at least one wavelength, λ, to perform a differential mode delay, DMD, test, with spectral range 840nm ≤ λ ≤1060 nm, wherein a single mode fiber is used to simulate the offset launch and behaves as single mode fiber in the spectral range of λ;
selecting the multimode fiber if its radially localized modal bandwidth is equal to or greater than the target modal bandwidth.

2. The method of claim 1, wherein the DMD test is performed at two or more wavelengths by simultaneously using two or more optical sources and two or more filters and detectors.

3. The method of claim 1 or 2, further comprising applying a modal dispersion compensation to light that extends beyond the selected range.

4. The method of any preceding claim, wherein A is in a range of between 6 to 9 microns and/or B is in a range of between 13 and 16 microns.

5. The method of any preceding claim, wherein X is in the range 1 ≤ X (microns) ≤ 6 and/or P is in the range 60% ≤ P ≤ 80%.

6. The method of any preceding claim, wherein the method is for selecting a graded-index glass optical multimode fiber with left tilt in its DMD profile, L-MMF, and wherein the target modal bandwidth, TMB, is in the range TMB ≥ 5000 MHz-km when the L-MMF is used in the optical channel with a multimode vertical-cavity surface-emitting laser, utilizing an offset or vortex launch within the [A, B] micron region inside a multimode fiber core.
